# EUROPÄISCHE PATENTSCHRIFT

(11) **EP 3 417 151 B1**
(45) Veröffentlichungstag und Bekanntmachung des Hinweises auf die Patenterteilung: **18.12.2024**
(21) Anmeldenummer: 17710113.6
(22) Anmeldetag: 06.02.2017
(51) Int. Cl.: F16C 9/04, F16C 11/04, F01B 9/02, F16C 5/00

(54) **ZYLINDERBAUGRUPPE EINES ORC-MOTORS**
CYLINDER ASSEMBLY OF AN ORC ENGINE
ENSEMBLE CYLINDRE DE MOTEUR ORC

(30) Priorität: 16.02.2016 DE 102016102649
(43) Veröffentlichungstag der Anmeldung: 26.12.2018
(73) Patentinhaber: DeVeTec GmbH, 66386 St. Ingbert (DE)
(72) Erfinder: SCHNUR, Rainer, 66687 Morscholz (DE); HORBACH, Joscha, 66871 Konken (DE)
(74) Vertreter: Patentanwälte Bauer Vorberg Kayser
(86) Internationale Anmeldenummer: PCT/DE2017/100085
(87) Internationale Veröffentlichungsnummer: WO 2017/140296

(56) Entgegenhaltungen:
- WO-A1-2015/063031
- DE-B- 1 264 882
- DE-U1- 202015 000 722
- GB-A- 119 157
- NL-C- 30 562
- US-A1- 2012 324 889

## Beschreibung

Die Erfindung betrifft eine Zylinderbaugruppe eines ORC-Motors mit einem Kreuzkopf zur gelenkigen Verbindung einer Kolbenstange eines in einem Arbeitszylinder geführten Kolbens mit einer Pleuelstange des ORC-Motors, wobei der Kreuzkopf in einer Führung in Längsrichtung der Kolbenstange bewegbar ist.

Durch Benutzung bekannte ORC-Motoren mit einer solchen Baugruppe bauen auf Verbrennungsmotoren auf, deren Zylinderbuchsen zur Führung des Kreuzkopfes dienen. Der den Kolben führende Arbeitszylinder schließt sich unmittelbar koaxial an eine Zylinderbuchse des Verbrennungsmotors an. Bei Reparatur- und Wartungsarbeiten notwendige Demontagen des Arbeitszylinders und der durch den Kolben, die Kolbenstange und den Kreuzkopf gebildeten Baueinheit sind mit hohem Aufwand, insbesondere mit einer zusätzlichen Demontage der Zylinderbuchsen des Verbrennungsmotors verbunden.

Aus dem Stand der Technik ist aus der NL 30 562 C eine Zylinderbaugruppe gemäß Oberbegriff des Anspruchs 1 bekannt. Aus US 2012/324889 A1 und aus GB 119 157 A sind weitere Zylinderbaugruppen bekannt.

Aus DE 12 64 882 B, aus WO 2015/063031 A1, sowie aus DE 20 2015 000722 U1 sind unterschiedliche Ausgestaltungen von Kreuzköpfen bekannt.

Der Erfindung liegt die Aufgabe zugrunde, den Aufwand für Reparatur- bzw. Wartungsarbeiten bei einer Zylinderbaugruppe zu verringern.

Durch die vorliegende Erfindung wird eine montagefreundliche neue Zylinderbaugruppe der eingangs genannten Art geschaffen, die dadurch gekennzeichnet ist, dass der Kreuzkopf ohne vollständige oder teilweise Demontage der Führung von der Pleuelstange in Richtung zu dem Arbeitszylinder hin ablösbar ist.

Durch die Führung ist erfindungsgemäß genügend Freiraum zur Demontage des Kreuzkopfes unter axialer Verschiebung eines Pleuelbolzens belassen oder/und erfindungsgemäß ist der Kreuzkopf kann zwecks Demontage von der Pleuelstange in Teile zerlegbar. Dabei ist der Kreuzkopf im Vergleich zum Durchmesser einer buchsenförmigen Führung so klein, dass sich der den Kreuzkopf und die Pleuelstange verbindende Pleuelbolzen seitlich weit genug aus seinen Drehlagerungen herausschieben lässt. Gemäß einer Ausführungsform ist der Kreuzkopf aus wenigstens zwei, den Kreuzkopf und die Pleuelstange verbindenden Pleuelbolzen umschließenden Halbschalen gebildet.

Mit der Lösung des Kreuzkopfes von der Pleuelstange lässt sich eine den Kreuzkopf, die Kolbenstange und den Kolben umfassende Baueinheit in ihrer Gesamtheit von der Pleuelstange abkoppeln.

In einer bevorzugten Ausführungsform der Erfindung umfasst der Kreuzkopf Gabelschenkel, welche Durchgangsöffnungen für den Pleuelbolzen aufweisen und zwischen denen das freie Ende der Pleuelstange zur Anordnung kommt.

Vorzugsweise ist der Kreuzkopf durch die Führung gegen Verdrehung um die Längsachse der Kolbenstange gesichert. Vorteilhaft lassen sich dadurch bei Montagearbeiten auf die genannte Baueinheit ausgeübte Drehmomente abfangen.

Die Führung weist vorzugsweise eine zur Längsachse der Kolbenstange koaxiale Führungsbuchse mit von der Buchseninnenwand vorstehenden Führungsschienen auf. Durch die Führungsschienen können z.B. Paare diametral einander gegenüberliegender Führungsflächen, insbesondere ebene Führungsflächen, für den Kreuzkopf gebildet sein.

Insbesondere stehen die Gabelschenkel von einem mit der Kolbenstange verbindbaren, vorzugsweise konischen Abschnitt des Kreuzkopfes vor. Die konische Form des Kreuzkopfes sorgt für eine gleichmäßige Übertragung und Verteilung der Kolbenkraft über die Kolbenstange auf die Gabelschenkel.

In einer besonders bevorzugten Ausführungsform der Erfindung besteht zwischen wenigstens einem der Gabelschenkel und dem Abschnitt eine lösbare Verbindung, insbesondere Schraubverbindung. Der Kreuzkopf lässt sich somit in Teile zerlegen, was seine Demontage auch bei eingeschränkter Verschiebbarkeit des Pleuelbolzens möglich macht.

In einer weiteren Ausführungsform der Erfindung ist die Kolbenstange als Hohlkörper ausgebildet.

Vorzugsweise sind der Kreuzkopf mit der Kolbenstange und die Kolbenstange mit dem Kolben über zur Längsachse der Kolbenstange koaxiale Gewinde verschraubbar.

Vorzugsweise ist der Gewindedurchmesser der Verschraubung der Kolbenstange mit dem Kreuzkopf größer als der Gewindedurchmesser der Verschraubung der Kolbenstange mit dem Kolben. Dies ermöglicht eine separate Loslösung des Kolbens von der Kolbenstange, ohne Lösung der Verschraubung zwischen der Kolbenstange und dem Kreuzkopf.

In einer weiteren Ausführungsform der Erfindung ist neben den genannten Verschraubungen jeweils eine Passstiftverbindung hergestellt. Durch die Passstiftverbindung lässt sich sichern, dass der Kolben in Bezug auf den Kreuzkopf stets die gleiche Drehposition einnimmt.

Die Erfindung wird nachfolgend anhand von Ausführungsbeispielen und der beiliegenden, sich auf eines dieser Ausführungsbeispiele beziehenden Zeichnungen weiter erläutert. Es zeigen:
- Fig. 1: eine einen Kreuzkopf umfassende erfindungsgemäße Baugruppe eines ORC-Motors in einer geschnittenen Seitenansicht, und
- Fig. 2: eine geschnittene Draufsicht auf die Baugruppe von Fig. 1.

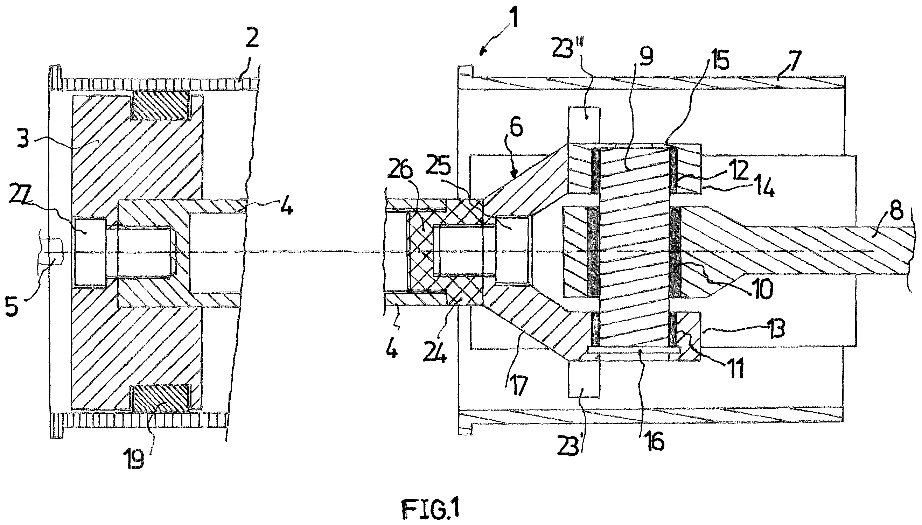

Eine in Fig. 1 dargestellte Baugruppe 1 eines ORC-Motors umfasst einen Arbeitszylinder 2, in dem ein Kolben 3 und eine starr mit dem Kolben 3 verbundene Kolbenstange 4 geführt sind. Von einem den Arbeitszylinder 2 abschließenden Zylinderkopf (nicht gezeigt) steht gegen den Kolben 3 zentral ein stiftartiges Element 5 zur Betätigung eines in dem Zylinderkopf untergebrachten Einlassventils für ein unter Druck stehendes Arbeitsmedium vor.

An ihrem dem Kolben 3 abgewandten Ende steht die Kolbenstange 4 in Verbindung mit einem Kreuzkopf 6, der innerhalb einer zu dem Arbeitszylinder 2 koaxialen Buchse 7 in Richtung parallel zur Längsrichtung der Kolbenstange 4 geführt und seinerseits mit einer den Kreuzkopf 6 bewegenden Pleuelstange 8 verbunden ist.

In dem gezeigten Ausführungsbeispiel handelt es sich bei der Buchse 7 um eine Zylinderbuchse eines Verbrennungsmotors, welcher eine Basis für den ORC-Motor bildet, wobei der Arbeitszylinder 1 und die den Kolben 3, die Kolbenstange 4 und den Kreuzkopf 6 bildende Baueinheit des ORC-Motors an die Stelle des Kolbens und des Zylinderkopfes des Verbrennungsmotors treten.

Der gelenkigen Verbindung der Pleuelstange 8 mit dem Kreuzkopf 6 dient ein Pleuelbolzen 9, welcher drehbar in einem Lagerbuchseneinsatz 10 der Pleuelstange 8 gelagert ist.

Wie Fig. 1 ferner erkennen lässt, ragt der Pleuelbolzen 9 mit seinen beiden Enden jeweils in einen Lagerbuchseneinsatz 11 bzw. 12, wobei die Lagerbuchseneinsätze 11,12 jeweils in einer Durchgangsöffnung eines Gabelschenkels 13 bzw. 14 des Kreuzkopfes 6 angeordnet sind. Durch eine Begrenzungswand 15 in der Öffnung des Gabelschenkels 14 und einen in einer Nut in der Öffnung des Gabelschenkels 13 untergebrachten Sprengring 16 ist der Pleuelbolzen 9 in den Buchseneinsätzen 10 bis 12 axial festgelegt.

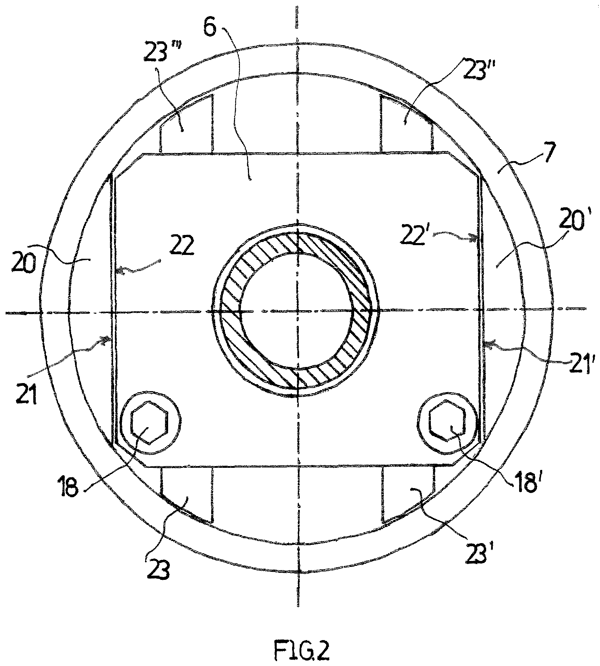

Wie Fig. 1 ferner erkennen lässt, umfasst der Kreuzkopf 6 einen konischen Abschnitt 17, welcher einstückig in den Gabelschenkel 13 übergeht. Der Gabelschenkel 14 ist durch Schrauben 18 und 18' (Fig. 2) lösbar mit dem konischen Abschnitt 17 verbunden.

Wie aus Fig. 2 hervorgeht, sind an der Innenwand der Buchse 7 einander diametral gegenüberliegende Führungsschienen 20 und 20' angebracht, die jeweils zwei zueinander im Abstand angeordnete ebene Führungsflächen 21 bzw. 21' aufweisen. Gegen diese Führungsflächen 21,21' liegt der Kreuzkopf 6 mit entsprechenden ebenen Anlageflächen 22 bzw. 22' gleitend an.

Es versteht sich, dass der Kreuzkopf durch die Anlage gegen die vier Führungsflächen gegen Drehung um die Längsachse der Kolbenstange 4 gesichert Ist. Vier von dem Kreuzkopf 6 gegen die Innenwand der Buchse 7 vorstehende Führungszapfen 23, 23', 23" und 23‴, die auf der Innenfläche der Buchse 7 gleiten, legen den Kreuzkopf 6 in Richtung parallel zu den Führungsflächen innerhalb der Buchse 7 fest.

Auf seiner der Pleuelstange 8 abgewandten Seite ist der zum Teil hohle konische Abschnitt 17 über ein Zwischenstück 24 mit der Kolbenstange 4 verbunden. Eine Schraube 25 verbindet den konischen Abschnitt 17 mit dem Zwischenstück 24. Ein Endabschnitt 26 des Zwischenstücks 24 weist ein Außengewinde auf, das mit einem Innengewinde der als Hohlkörper ausgebildeten Kolbenstange 4 verschraubt ist.

Abweichend von dem gezeigten Beispiel könnte das Zwischenstück 24 auch einstückig mit dem konischen Abschnitt 17 oder der Kolbenstange 4 ausgebildet sein.

Der mit einem Führungsring 19 versehene Kolben 3 lässt sich mit Hilfe einer zentralen Schraube 27 mit der Kolbenstange 4 verschrauben.

Es versteht sich, dass die Hülse 7 mit einem (nicht gezeigten) Kurbelgehäuse und der Arbeitszylinder 2 koaxial zu der Buchse 7 mit einer ggf. mehrere solcher Buchsen 7 aufweisenden (nicht gezeigten) Zylinderbank verbunden ist.

Im Falle von Reparatur- oder Wartungsarbeiten lässt sich nach Abbau des Arbeitszylinders 2 die komplette, aus dem Kolben 3, der Kolbenstange 4 und dem Kreuzkopf 6 bestehende Baueinheit durch Lösen der Verbindung zwischen dem Kreuzkopf 6 und der Pleuelstange 8 wie folgt demontieren:
Zunächst wird mit Hilfe eines in die Buchse 7 eingeführten Werkzeugs der Sprengring 16 entfernt. Aufgrund des Freiraums zwischen dem betreffenden Bolzenende und der Innenwand der Buchse 7 lässt sich dann der Pleuelbolzen 9 so weit axial verschieben, dass der Pleuelbolzen 9 mit seinem anderen Bolzenende nicht mehr in den Lagerbuchsenabschnitt 12 eingreift. Im nächsten Demontageschrittwerden die Schrauben 18 und 18' gelöst und der Gabelschenkel 14 entfernt. Nach axialer Verschiebung des Pleuelbolzen 9 in nun entgegengesetzter Richtung bis zur Aufhebung des Eingriffs des Pleuelbolzen 9 in den Lagerbuchseneinsatz 11 des Gabelschenkels 13 lässt sich die genannte Baueinheit in Richtung der Achse der Buchse 7 zum Zylinderkopf hin von der Pleuelstange 8 abkoppeln.

Die Führungszapfen 23, 23', 23" und 23‴ belassen in der Buchse 7 genügend Freiraum für die Durchführung der obengenannten Montageschritte, so dass sie während der Montage an Ort und Stelle verbleiben können. Sie sind in dem gezeigten Beispiel mit der Buchse 7 unlösbar verstiftet.

Es versteht sich, dass die durch die Führungsschienen 20, 20' gebildeten Führungsflächen 21, 21' keine Drehung des Kreuzkopfes 6 um die Achse der Buchse 7 zulassen.

Diese, Drehmomente um die Buchsenachse abfangende Führung ermöglicht problemlos eine separate Demontage nur des Kolbens 3 bei eingebauter, aus dem Kolben 3, der Kolbenstange 4 und dem Kreuzkopf 6 bestehender Baueinheit.

Bei Lösung der zentralen Schraube 27 auftretende Drehmomente nimmt die Führung problemlos auf.

Eine beim Lösen der Schraube 27 ungewollte Mitlösung der Verschraubung der Kolbenstange 4 mit dem Zwischenstück 24 ist dadurch verhindert, dass es infolge größerer Gewindedurchmesser zum Mitlösen letzterer Verschraubung eines höheren Drehmoments bedarf, als es die Lösung der Schraube 27 erfordert.

Das Betätigungselement 5 trifft nahe dem oberen Totpunkt des Kolbens 3 im Normalfall senkrecht in der Kolbenmitte auf den Kolben 3 auf. Aus Abweichungen der Auftreffposition und des Auftreffwinkels im Rahmen von Toleranzgrenzen resultierende Querkräfte werden durch die Führung der obengenannten Baugruppe in dem Arbeitszylinder 2 über den Führungsring 19 und in der Buchse 7 durch die Schienen 20, 20' sowie die Innenwand der Buchse 7, gegen welche die Führungszapfen 23, 23', 23", 23‴ anliegen, aufgenommen.

Querkräfte können sich dadurch verstärken, dass das Betätigungselement 5 nach Montagearbeiten versetzt zu einer durch ständiges Auftreffen auf die Kolbenoberfläche gebildeten Vertiefung auf den Kolben 3 auftrifft. Bei Montagearbeiten ist also darauf zu achten, dass der Kolben nach dem Zusammenbau sich wieder in seiner vorherigen Drehposition befindet. Die Reproduzierbarkeit der Drehposition kann durch Verstiftung zwischen dem Kolben 3 und der Kolbenstange 4 sowie zwischen der Kolbenstange 4 und dem Kreuzkopf 6 gesichert werden.

## Patentansprüche

1. Zylinderbaugruppe (1) für einen ORC-Motor mit einem Kreuzkopf (6) zur gelenkigen Verbindung einer Kolbenstange (4) eines in einem Arbeitszylinder (2) geführten Kolbens (3) mit einer Pleuelstange (8) des ORC- Motors, wobei der Kreuzkopf (6) in einer buchsenförmigen Führung (7) in Längsrichtung der Kolbenstange (4) bewegbar ist,
**dadurch gekennzeichnet,**
**dass** der Kreuzkopf (6) ohne vollständige oder teilweise Demontage der Führung von der Pleuelstange (8) in Richtung zu dem Arbeitszylinder (2) hin ablösbar ist, wobei mit der Ablösung des Kreuzkopfes (6) von der Pleuelstange (8) eine durch den Kreuzkopf (6), die Kolbenstange (4) und den Kolben (3) gebildete Baueinheit in ihrer Gesamtheit von der Pleuelstange (8) abkoppelbar ist, und wobei durch die Führung Freiraum zur Demontage des Kreuzkopfes (6) unter axialer Verschiebung eines den Kreuzkopf (6) und die Pleuelstange (8) verbindenden Pleuelbolzens (9) belassen ist, indem der Kreuzkopf (6) im Vergleich zum Durchmesser der buchsenförmigen Führung (7) so klein ist, dass sich der Pleuelbolzen (9) seitlich weit genug aus seinen Drehlagerungen herausschieben lässt.

2. Zylinderbaugruppe (1) nach Anspruch 1, **dadurch gekennzeichnet, dass** der Kreuzkopf (6) zwecks Demontage in Teile (17,13; 14) zerlegbar ist, indem der Kreuzkopf (6) aus wenigstens zwei, einen den Kreuzkopf (6) und die Pleuelstange (8) verbindenden Pleuelbolzen (9) umschließenden Halbschalen gebildet ist.

3. Zylinderbaugruppe (1) nach Anspruch 1 oder 2, **dadurch gekennzeichnet,**
**dass** der Kreuzkopf (6) Durchgangsöffnungen für den Pleuelbolzen (9) aufweisende Gabelschenkel (13,14) umfasst, zwischen denen das freie Ende der Pleuelstange (8) zur Anordnung kommt.

4. Zylinderbaugruppe (1) nach Anspruch 3, **dadurch gekennzeichnet, dass** die Gabelschenkel (13,14) von einem mit der Kolbenstange (4) verbindbaren, vorzugsweise konischen Abschnitt (17) des Kreuzkopfes (6) abstehen.

5. Zylinderbaugruppe (1) nach Anspruch 4, **dadurch gekennzeichnet, dass** zwischen wenigstens einem der Gabelschenkel (13,14) und dem konischen Abschnitt (17) eine lösbare Verbindung, insbesondere durch Schrauben (18,18'), besteht.

6. Zylinderbaugruppe (1) nach einem der Ansprüche 1 bis 5, **dadurch gekennzeichnet,**
**dass** der Kreuzkopf (6) durch die Führung gegen Verdrehung um die Längsachse der Kolbenstange (4) gesichert ist.

7. Zylinderbaugruppe (1) nach einem der Ansprüche 1 bis 6, **dadurch gekennzeichnet,**
**dass** die Führung eine zur Längsachse der Kolbenstange (4) koaxiale Führungsbuchse (7) mit von der Buchseninnenwand vorstehenden Führungsschienen (20,20') aufweist.

8. Zylinderbaugruppe (1) nach Anspruch 7, **dadurch gekennzeichnet, dass** durch die Führungsschienen (20,20') diametral einander gegenüberliegende Führungsflächen (21,21') gebildet sind, ggf. Paare von insbesondere ebenen Führungsflächen.

9. Zylinderbaugruppe (1) nach einem der Ansprüche 1 bis 8, **dadurch gekennzeichnet,**
**dass** die Kolbenstange (4) als Hohlkörper ausgebildet ist.

10. Zylinderbaugruppe (1) nach einem der Ansprüche 1 bis 9, **dadurch gekennzeichnet,**
**dass** der Kreuzkopf (6) mit der Kolbenstange (4) und die Kolbenstange (4) mit dem Kolben (3) über zur Längsachse der Kolbenstange (4) koaxiale Gewinde verschraubbar sind.

11. Zylinderbaugruppe (1) nach Anspruch 10, **dadurch gekennzeichnet, dass** der Gewindedurchmesser der Verschraubung der Kolbenstange mit dem Kreuzkopf (4) größer als der Gewindedurchmesser der Verschraubung der Kolbenstange (4) mit dem Kolben (3) ist.

12. Zylinderbaugruppe (1) nach Anspruch 10 oder 11, **dadurch gekennzeichnet,**
**dass** neben den Verschraubungen jeweils eine Passstiftverbindung hergestellt ist.

## Claims

1. A cylinder assembly (1) of an OPC engine having a crosshead (6) for the articulated connection of a piston rod (4) of a piston (3), which is guided in a working cylinder (2), to a connecting rod (8) of the OPC engine, the crosshead (6) being movable in a bushing-shaped guide (7) in the longitudinal direction of the piston rod (4), **characterized in that** the crosshead (6) can be detached from the connecting rod (8) in the direction towards the working cylinder without complete or partial removal of the guide, wherein, with the detachment of the crosshead (6) from the connecting rod (8), a structural unit formed by the crosshead (6), the piston rod (4) and the piston (3) can be uncoupled in its entirety from the connecting rod (8), and wherein the guide leaves free space for dismantling the crosshead (6) with axial displacement of a connecting rod pin (9) connecting the crosshead (6) and the connecting rod (8), **in that** the crosshead (6) is so small in comparison to the diameter of the bushing-shaped guide (7) that the connecting rod pin (9) can be pushed laterally far enough out of its pivot bearings.

2. The cylinder assembly (1) according to Claim 1, **characterized in that** the crosshead (6) can be disassembled into parts (17, 13; 14) for the purpose of disassembly, **in that** the crosshead (6) is formed from at least two half-shells enclosing a connecting rod pin (9) connecting the crosshead (6) and the connecting rod (8).

3. The cylinder assembly (1) according to Claim 2 or 3, **characterized in that** the crosshead (6) comprises fork legs (13, 14) which have through-openings for the connecting rod pin (9) and between which the free end of the connecting rod (8) comes to be arranged.

4. The cylinder assembly (1) according to Claim 3, **characterized in that** the fork legs (13, 14) protrude from a section (17) of the crosshead (6) which is preferably conical and can be connected to the piston rod (4).

5. The cylinder assembly (1) according to Claim 4, **characterized in that** there is a detachable connection, in particular by means of screws (18, 18') between at least one of the fork legs (13, 14) and the conical section (17).

6. The cylinder assembly (1) according to any one of Claims 1 to 5, **characterized in that** the crosshead (6) is secured by the guide against rotation about the longitudinal axis of the piston rod (4).

7. The cylinder assembly (1) according to any one of Claims 1 to 6, **characterized in that** the guide has a guide bushing (7) which is coaxial to the longitudinal axis of the piston rod (4) and has guide rails (20, 20') protruding from the bushing inner wall.

8. The cylinder assembly (1) according to Claim 7, **characterized in that** the guide rails (20, 20') form diametrically opposed guide surfaces (21, 21'), optionally comprising, in particular, flat guide surfaces.

9. The cylinder assembly (1) according to any one of Claims 1 to 8, **characterized in that** the piston rod (4) is in the form of a hollow body.

10. The cylinder assembly (1) according to any one of Claims 1 to 9, **characterized in that** the crosshead (6) can be screw-fastened to the piston rod (4) and the piston rod (4) can be screw-fastened to the piston (3) via threads which are coaxial to the longitudinal axis of the piston rod (4).

11. The cylinder assembly (1) according to Claim 10, **characterized in that** the thread diameter of the screw-fastening of the piston rod (4) to the crosshead (4) is greater than the thread diameter of the screw-fastening of the piston rod (4) to the piston (3).

12. The cylinder assembly (1) according to Claim 10 or 11, **characterized in that** in each case a dowel pin connection is made in addition to the screw-fastenings.

## Revendications

1. Ensemble de cylindre (1) pour un moteur COR avec une crosse (6) pour une liaison articulée d'une tige de piston (4) d'un piston (3) guidé dans un cylindre de travail (2) avec une tige de bielle (8) du moteur COR, sachant que la crosse (6) peut être mobile dans le sens longitudinal de la tige de piston (4) dans un guidage (7) en forme de douille, **caractérisé en ce que**
la crosse (6) peut être séparée sans démontage complet ou partiel du guidage de la tige de bielle (8) en direction du cylindre de travail (2), sachant qu'avec la séparation de la crosse (6) de la tige de bielle (8) une unité de construction formée par la crosse (6), la tige de piston (4) et le piston (3) peut être découplée dans sa totalité de la tige de bielle (8) et sachant qu'à travers le guidage de l'espace libre est laissé pour le démontage de la crosse (6) par déplacement axial d'un boulon de bielle (9) reliant la crosse (6) et la tige de bielle (8), la crosse (6) étant si petite en comparaison du diamètre du guidage (7) en forme de douille que le boulon de bielle (9) peut être glissé latéralement suffisamment loin hors de ses logements de rotation.

2. Ensemble de cylindre (1) selon la revendication 1, **caractérisé en ce que**
la crosse (6) peut être décomposée en pièces (17, 13, 14) à des fins de démontage, la crosse (6) étant formée d'au moins deux demi-coques entourant un boulon de bielle (9) reliant la crosse (6) et la tige de bielle (8)

3. Ensemble de cylindre (1) selon la revendication 1 ou 2, **caractérisé en ce que**
la crosse (6) comprend des ouvertures de passage pour les branches de fourche (13, 14) comportant le boulon de bielle (9) entre lesquelles vient se mettre en place l'extrémité libre de la tige de bielle (8).

4. Ensemble de cylindre (1) selon la revendication 3, **caractérisé en ce que**
les branches de fourche (13, 14) s'écartent d'une section (17) de la crosse (6) de préférence conique pouvant être reliée à la tige de piston (4).

5. Ensemble de cylindre (1) selon la revendication 4, **caractérisé en ce qu'**
une liaison amovible, en particulier par vis (18, 18'), existe entre au moins une des branches de fourche (13, 14) et la section conique (17).

6. Ensemble de cylindre (1) selon l'une quelconque des revendications 1 à 5, **caractérisé en ce que**
la crosse (6) est sécurisée par le guidage envers toute rotation autour de l'axe longitudinal de la tige de piston (4).

7. Ensemble de cylindre (1) selon l'une quelconque des revendications 1 à 6, **caractérisé en ce que**
le guidage comporte une douille de guidage (7) coaxiale à l'axe longitudinal de la tige de piston (4) avec des glissières (20, 20') en saillie de la paroi intérieure de douille.

8. Ensemble de cylindre (1) selon la revendication 7, **caractérisé en ce que**
des surfaces de guidage (21, 21') diamétralement opposées l'une à l'autre sont formées par les glissières (20, 20'), le cas échéant par des paires de surfaces de guidage en particulier planes.

9. Ensemble de cylindre (1) selon l'une quelconque des revendications 1 à 8, **caractérisé en ce que**
la tige de piston (4) est constituée sous la forme d'un corps creux.

10. Ensemble de cylindre (1) selon l'une quelconque des revendications 1 à 9,
**caractérisé en ce que**
la crosse (6) peut être vissée à la tige de piston (4) et la tige de piston (4) au piston (3) par le filetage coaxial à l'axe longitudinal de la tige de piston (4).

11. Ensemble de cylindre (1) selon la revendication 10, **caractérisé en ce que**
le diamètre de filetage de l'assemblage par vissage de la tige de piston avec la crosse (4) est plus grand que le diamètre de filetage de l'assemblage par vissage de la tige de piston (4) avec le piston (3).

12. Ensemble de cylindre (1) selon la revendication 10 ou 11, **caractérisé en ce qu'**
une liaison à goupille d'assemblage est réalisée en plus des assemblages par vissage.
